# EUROPEAN PATENT SPECIFICATION

(11) **EP 2 369 164 B1**
(45) Date of publication and mention of the grant of the patent: **09.03.2016**
(21) Application number: 08878726.2
(22) Date of filing: 10.12.2008
(51) Int. Cl.: F02M 26/05, F02M 26/25, F02M 26/39, F02B 37/00, F02D 41/00

(54) **CONTROL APPARATUS OF AN INTERNAL COMBUSTION ENGINE**
STEUERVORRICHTUNG FÜR VERBRENNUNGSMOTOR
APPAREIL DE COMMANDE DE MOTEUR A COMBUSTION INTERNE

(43) Date of publication of application: 28.09.2011
(73) Proprietor: TOYOTA JIDOSHA KABUSHIKI KAISHA, Toyota-shi, Aichi-ken, 471-8571 (JP)
(72) Inventor: KOGO, Tomoyuki, Toyota-shi, Aichi-Ken, 471-8571 (JP); OGAWA, Takashi, Toyota-shi, Aichi-Ken, 471-8571 (JP); ITO, Katsuhiro, Toyota-shi, Aichi-Ken, 471-8571 (JP); IWATA, Kazuyasu, Toyota-shi, Aichi-Ken, 471-8571 (JP)
(74) Representative: Winter, Brandl, Fürniss, Hübner, Röss, Kaiser, Polte - Partnerschaft mbB
(86) International application number: PCT/JP2008/072408
(87) International publication number: WO 2010/067427

(56) References cited:
- EP-A1- 1 081 368
- EP-A2- 1 867 863
- GB-A- 2 400 455
- JP-A- H1 122 499
- JP-A- 11 280 566
- JP-A- 2002 055 712
- JP-A- 2005 054 778
- JP-A- 2007 303 381
- JP-A- 2007 303 381
- JP-A- 2008 069 690
- US-A1- 2003 226 540
- US-A1- 2004 129 238

## Description

### [TECHNICAL FIELD]

The present invention relates to a control apparatus of an internal combustion engine.

### [BACKGROUND ART]

When a trough portion of exhaust pulsation reaches an exhaust port in an overlap period which is a period in which both an intake valve and an exhaust valve of an internal combustion engine are open, the pressure in an exhaust pipe becomes lower than the pressure in an intake pipe, so fresh air flows from the intake pipe into the exhaust pipe while passing through the interior of a cylinder. As a result of this, the burned gas in the cylinder can be swept away. Then, there has been known a technique in which provision is made for a communication passage that places some portions of the exhaust passage in fluid communication with each other, and a valve that serves to change the passage area of the communication passage, wherein the pressure in the exhaust port in overlap periods is changed by opening and closing the valve (for example, see a first patent document).

However, in cases where an EGR passage is provided for connecting between an intake passage and an exhaust passage of an internal combustion engine, pulsation of exhaust gas propagates also to the interior of this EGR passage. In other words, the volume of the EGR passage is also contained in the volume of a range in which the exhaust pulsation propagates. Here, the larger the volume of the range in which the exhaust pulsation propagates, the smaller the amplitude of the exhaust pulsation becomes, and hence the higher the pressure at a minimal value thereof becomes. Accordingly, a differential pressure between the intake passage and the exhaust passage becomes smaller, so the amount of fresh intake air flowing from the intake passage into the exhaust passage while passing through the interior of a cylinder in overlap periods decreases. For this reason, there is a possibility that the amount of burned gas remaining in the cylinder may increase.

Although it is also considered that in order to suppress this, an EGR valve is arranged at a location close to the exhaust passage, the EGR valve is exposed to the exhaust gas of high temperature, so it is necessary to select a material which can withstand high temperature or there is a fear that it may become difficult to carry out the adjustment of valve opening with high accuracy under high temperature. In other words, there is a fear that it may become impossible to supply a proper amount of an EGR gas. In addition, because the volume of a passage from the EGR valve to the intake passage is added or increased, a time difference occurs between the operation of the EGR valve and the change of the amount of the EGR gas, thus giving rise to a possibility that the control of the amount of the EGR gas may become difficult.
[First Patent Document] Japanese patent application laid-open No. H11-324746
[Second Patent Document] Japanese patent application laid-open No. H10-0176558
[Third Patent Document] Japanese patent application laid-open No. 2004-257306
[Fourth Patent Document] Japanese patent application laid-open No. 2006-022672
[Fifth Patent Document] Japanese patent application laid-open No. 2001-214816
[Sixth Patent Document] Japanese patent application laid-open No. H06-307295
Document EP 1 081 368 A1 describes a control apparatus of an internal combustion engine according to the preamble of claim 1, wherein the opening and closing device is closed at high load operation of the internal combustion engine independently from the rotation state of the internal combustion engine.
Document JP 2007 303381 A describes a control apparatus of an internal combustion engine according to the preamble of claim 4, wherein the opening and closing device is closed when retention of condensate in a cooler within the EGR passage is detected and EGR gas is not circulated to the intake passage.

### [DISCLOSURE OF THE INVENTION]

### [PROBLEMS TO BE SOLVED BY THE INVENTION]

The present invention is made in view of the problems as referred to above, and has its object to provide a technique which is able to supply a proper amount of EGR gas while making narrower a range within which exhaust pulsation propagates.

### [MEANS FOR SOLVING THE PROBLEMS]

The object is solved by the features of the independent claims. The dependent claims are directed to preferred embodiments of the invention.

The cutoff valve is provided at the upstream side of the EGR valve, i.e., at an exhaust passage side, and hence, by closing this cutoff valve, exhaust pulsation does not propagate from this cutoff valve up to the EGR valve. In other words, it is possible to decrease the volume of a range or space within which exhaust pulsation propagates.

Here, in order to adjust the amount of EGR gas, the EGR valve requires high precision adjustment of the degree of opening thereof. For that reason, the EGR valve is arranged at the intake passage side at which the temperature thereof becomes lower. On the other hand, the cutoff valve need only to interrupt the exhaust pulsation or to allow the EGR gas to pass therethrough, so it does not require high precision adjustment of the degree of opening thereof. In other words, the cutoff valve can be arranged immediately near the exhaust passage where the temperature thereof becomes high.

In addition, by using the cutoff valve of the normally open type, the EGR gas can be circulated to the EGR passage, even at the time when the cutoff valve is in a failure, or before the cutoff valve is operated. For example, in cases where the cutoff valve is of a normally closed type which is opened and closed by the use of negative pressure which is generated in the intake passage of the internal combustion engine, negative pressure is used, for example, as a driving source for a negative pressure actuator such as a diaphragm, etc. In that case, even after starting of the internal combustion engine, the cutoff valve can not be operated until the negative pressure becomes large to a certain extent. In other words, the cutoff valve is in a closed state at the time of starting of the internal combustion engine, so the time to supply the EGR gas is delayed. In addition, when the cutoff valve is of a normally closed type, there is a possibility that the cutoff valve may remain closed at the time of failure thereof, thus becoming unable to supply the EGR gas. In contrast to this, if the cutoff valve is of a normally open type, the EGR gas can be passed therethrough even at the time of the failure of the cutoff valve, or before the operation of the cutoff valve, so that the generation of NOx can be suppressed.

Then, in this invention, provision may be made for an EGR gas supply determination unit that determines whether the operating state of said internal combustion engine is an operating state in which the EGR gas is supplied, wherein said cutoff valve may be opened and closed at times other than when said internal combustion engine is in the operating state in which the EGR gas is supplied.

Unburnt fuel (HC) or the like in the exhaust gas may adhere to the cutoff valve. When this HC solidifies due to heat, there is a possibility that the cutoff valve may become difficult to operate. In contrast to this, by opening and closing the cutoff valve in a periodic manner, the HC can be desorbed from the cutoff valve. Here, when the cutoff valve is closed, the supply of the EGR gas through the EGR passage becomes impossible, and hence, the cutoff valve is caused to open and close when there is no influence on the supply of the EGR gas. In other words, when the supply of the EGR gas is stopped, or when there is no need to supply the EGR gas, the cutoff valve can be closed without any problem.

The operating state in which the EGR gas is supplied means an operating state in which the supply of the EGR gas to the internal combustion engine is required. In other words, it is an operating state in which the EGR gas is supplied to the internal combustion engine in a positive manner. In addition, the times other than the operating state in which the EGR gas is supplied mean an operating state in which the supply of the EGR gas to the internal combustion engine is not required. For example, at the time of deceleration, the supply of fuel is stopped and combustion is not carried out, so the supply of EGR gas is not required. Moreover, the supply of EGR gas is not required at the time of high load, either. In other words, the time when combustion is not carried out in the internal combustion engine and the time when the supply of EGR gas is stopped can be said to be the times other than the operating state in which the EGR gas is supplied. Also, the time when the EGR valve is closed is included in this. Here, note that the opening and closing of the cutoff valve are carried out during the time the crankshaft of the internal combustion engine is rotating, but the opening and closing may be carried out while the crankshaft is not rotating.

In this manner, by causing the cutoff valve to open and close only at times other than when the internal combustion engine is in the operating state in which the EGR gas is supplied to the internal combustion engine, it is possible to suppress the generation of NOx in the operating state in which the EGR gas is supplied. On the other hand, the HC can be adsorbed from said cutoff valve at times other than when said internal combustion engine is in the operating state in which the EGR gas is supplied.

Here, note that in this invention, said cutoff valve may be opened and closed during the time said EGR valve is closed.

According to the control apparatus of claim 4, even in cases where the cutoff valve of a type other than a normally open type (e.g., of a normally closed type) is provided, by causing the cutoff valve to open and close, the HC can be desorbed from the cutoff valve.

In this invention, provision is made for:
a turbocharger that is arranged on the exhaust passage at a downstream side of a location at which said EGR passage is connected thereto;
a rotation number determination unit that determines whether the number of revolutions per unit time of said turbocharger exceeds a threshold value at the time when said cutoff valve is closed; and
a prohibition unit that prohibits said cutoff valve from being closed, when a determination is made by said rotation number determination unit that the number of revolutions per unit time of said turbocharger exceeds the threshold value.

By closing the cutoff valve, the amount of the exhaust gas which flows into the EGR passage is decreased, and hence, the pressure of the exhaust gas upstream of the turbocharger becomes easy to rise. As a result of this, the number of revolutions per unit time of the turbocharger becomes easy to increase, so there is a possibility that the number of revolutions per unit time of the turbocharger may exceed an allowable value. In contrast to this, if the cutoff valve is closed in cases where it is determined that the number of revolutions per unit time of the turbocharger becomes equal to or less than a threshold value, and if the cutoff valve is prohibited from being closed in cases where it is determined that the number of revolutions per unit time of the turbocharger exceeds the threshold value, it is possible to suppress the number of revolutions per unit time of the turbocharger from rising excessively. In other words, the threshold value can be made an upper limit value of the allowable number of revolutions of the turbocharger.

The rotation number determination unit makes a determination before the cutoff valve is actually closed. In other words, it is determined whether the number of revolutions per unit time of the turbocharger exceeds the threshold value at the time of assuming that the cutoff valve is closed. For example, because there is a correlation between the number of revolutions per unit time of the turbocharger and the pressure of the exhaust gas, such a determination may be made based on the pressure of the exhaust gas. Here, note that the number of revolutions per unit time of the turbocharger may be made the number of revolutions per unit time of a turbine or the number of revolutions per unit time of a shaft which connects the turbine and a compressor with each other.

In this invention, provision may be made for an abnormality determination unit that makes a determination that said change unit has an abnormality, when said EGR valve is open and when the amount of EGR gas supplied to said internal combustion engine is less than an estimated value.

When the EGR gas is supplied to the internal combustion engine, the EGR valve and the cutoff valve are opened. If the EGR valve and the cutoff valve are opened in a normal manner, the actual amount of EGR gas supplied to the internal combustion engine will become substantially the same as the estimated value. However, if the cutoff valve fails in a closed state, the EGR gas will no longer be supplied to the internal combustion engine, so a difference occurs between the actual amount of EGR gas supplied to the internal combustion engine and the estimated value. In other words, in cases where the actual amount of EGR gas is less than the estimated value in spite of the fact that the EGR valve is operating normally, a determination can be made that there is an abnormality in the change unit. Here, note that the time when the EGR valve is open means that the EGR valve is actually open. In other words, it is assumed that the EGR valve is not in a failure. In addition, the estimated value may have a certain amount of margin including an error, etc.

In this invention, provision may be made for an abnormality determination unit that makes a determination that said change unit has an abnormality, when a volumetric efficiency of said internal combustion engine is lower than an estimated value.

In other words, if the cutoff valve is not operated while remaining open even when one tries to close it, the volume of a range or space in which exhaust pulsation propagates becomes large, so for example, the amplitude of the exhaust pulsation becomes small. For that reason, the amount of fresh air to be sucked into the internal combustion engine decreases, so that the volumetric efficiency of the internal combustion engine becomes lower. Accordingly, in cases where the volumetric efficiency of the internal combustion engine is lower than the estimated value, a determination can be made that said change unit has an abnormality. Here, note that the estimated value may have a certain amount of margin including an error, etc.

### [EFFECT OF THE INVENTION]

According to a control apparatus of an internal combustion engine related to the present invention, it is possible to supply a proper amount of EGR gas, while making narrower a range within which exhaust pulsation propagates.

### [BRIEF DESCRIPTION OF THE DRAWINGS]

[Fig. 1] is a view showing the schematic construction of an internal combustion engine with its intake system and its exhaust system, to which a starting apparatus of an internal combustion engine according to embodiments of the present invention is applied.
[Fig. 2] is a view showing the relation between an exhaust gas pressure, an intake air pressure, and a crank angle.
[Fig. 3] is a view showing the relation between an operating state of the internal combustion engine and a cutoff valve.
[Fig. 4] is a flow chart showing a flow for opening and closing control of the cutoff valve according to a first embodiment.
[Fig. 5] is a flow chart showing a flow for abnormality determination of the cutoff valve according to a second embodiment.

### [EXPLANATION OF REFERENCE NUMERALS AND CHARACTERS]

- 1: internal combustion engine
- 2: cylinder(s)
- 3: intake port
- 4: intake pipe
- 5: intake valve
- 6: intake side cam
- 7: exhaust port
- 8: exhaust pipe
- 9: exhaust valve
- 10: cylinder head
- 11: exhaust side cam
- 13: crankshaft
- 14: connecting rod
- 15: piston
- 16: intake throttle valve
- 22: intake side cam shaft
- 24: intake side pulley
- 25: exhaust side cam shaft
- 27: exhaust side pulley
- 40: EGR device
- 41: EGR passage
- 42: EGR valve
- 43: EGR cooler
- 44: bypass passage
- 45: change-over valve
- 46: cutoff valve
- 50: turbocharger
- 51: turbine housing
- 81: fuel injection valve
- 90: ECU
- 91: accelerator opening sensor
- 92: crank position sensor
- 93: exhaust gas temperature sensor
- 95: air flow meter
- 96: supercharging pressure sensor

### [BEST MODES FOR CARRYING OUT THE INVENTION]

Hereinafter, reference will be made to specific embodiments of a control apparatus of an internal combustion engine according to the present invention based on the attached drawings.

### [First Embodiment]

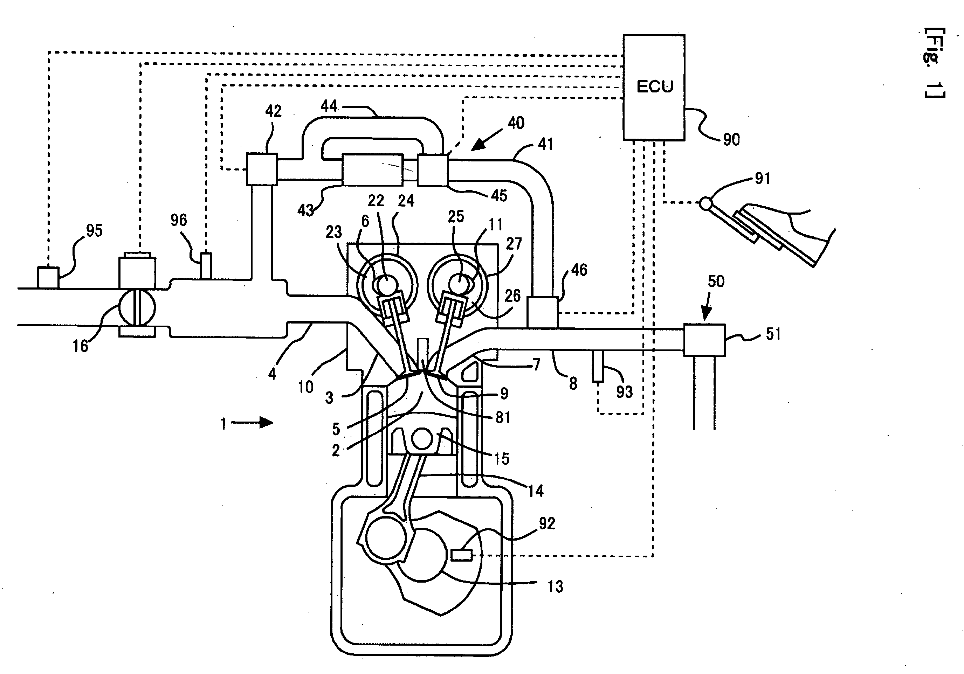

Fig. 1 is a view showing the schematic construction of an internal combustion engine with its intake system and its exhaust system according to this first embodiment of the present invention. The internal combustion engine 1 shown in Fig. 1 is a four-cycle diesel engine having four cylinders 2. Here, note that this embodiment can also be applied to internal combustion engines with other than four cylinders, or to gasoline engines.

An intake pipe 4 is connected to a combustion chamber in each of the cylinders 2 through an intake port 3 formed in a cylinder head 10 thereof. Then, the intake port 3 is provided at its one end at the side of the cylinder 2 with an intake valve 5. The opening and closing of this intake valve 5 are controlled by the rotational driving of an intake side cam 6. Here, note that in this embodiment, the intake pipe 4 corresponds to an intake passage in the present invention.

An exhaust pipe 8 is connected to a combustion chamber in each of the cylinders 2 through an exhaust port 7 formed in the cylinder head 10 thereof. Then, the exhaust port 7 is provided at its one end at the side of the cylinder 2 with an exhaust valve 9. The opening and closing of this exhaust valve 9 are controlled by the rotational driving of an exhaust side cam 11. Here, note that in this embodiment, the exhaust pipe 8 corresponds to an exhaust passage in the present invention.

Then, a piston 15 connected to a crankshaft 13 of the internal combustion engine 1 through a connecting rod 14 reciprocates within each of the cylinders 2. On the internal combustion engine 1, there are mounted fuel injection valves 81 for injecting fuel into the cylinders 2, respectively.

In addition, an intake throttle valve 16 for adjusting the flow rate of intake air flowing through the intake pipe 4 is arranged in the intake pipe 4 at a location between the ends thereof. On the intake pipe 4 at a location upstream of this intake throttle valve 16, there is mounted an air flow meter 95 that outputs a signal corresponding to the flow rate of fresh air flowing through the intake pipe 4. By means of this air flow meter 95, the amount of fresh air sucked into the internal combustion engine 1 can be metered or measured. In addition, on the intake pipe 4 at a location downstream of the intake throttle valve 16, there is mounted a supercharging pressure sensor 96 that serves to measure the pressure of intake air.

On the other hand, in the exhaust pipe 8 at a location between the ends thereof, there is arranged a turbine housing 51 of a turbocharger 50 that is driven to operate with the use of the energy of an exhaust gas as a driving source. On the exhaust pipe 8 at a location upstream of the turbine housing 51, there is arranged an exhaust gas temperature sensor 93 that outputs a signal corresponding to the temperature of the exhaust gas flowing through the exhaust pipe 8.

Moreover, the internal combustion engine 1 is equipped with an EGR device 40 that serves to introduce a part of the exhaust gas (hereinafter referred to as an EGR gas) flowing through the interior of the exhaust pipe 8 to the intake passage 4. This EGR device 40 is constructed to be provided with an EGR passage 41, an EGR valve 42, an EGR cooler 43, a bypass passage 44, a change-over valve 45 and a cutoff valve 46.

The EGR passage 41 serves to connect between the exhaust pipe 8 upstream of the turbine housing 51 and the intake pipe 4 downstream of the intake throttle valve 16. The exhaust gas is recirculated through this EGR passage 41. The EGR passage 41 may be connected to the intake ports 3 in place of the intake pipe 4. Also, the EGR passage 41 may be connected to the exhaust ports 7 in place of the exhaust pipe 8.

By adjusting the passage area of the EGR passage 41, the EGR valve 42 adjusts the amount of the EGR gas flowing through the EGR passage 41. Further, the EGR cooler 43 performs heat exchange between the EGR gas passing through the EGR cooler 43 and cooling water of the internal combustion engine 1, whereby the temperature of the EGR gas is reduced.

The bypass passage 44 connects between a portion of the EGR passage 41 at an upstream side of the EGR cooler 43 and a portion of the EGR passage 41 at a downstream side of the EGR cooler 43 so as to bypass the EGR cooler 43. The change-over valve 45 is arranged at a branch portion between the EGR passage 41 and the bypass passage 44. Then, the change-over valve 45 changes over the flow passage of the EGR gas so that the EGR gas is passed to only one of the EGR cooler 43 and the bypass passage 44. Here, note that in this embodiment, the bypass passage 44 and the change-over valve 45 may not be provided.

In addition, the cutoff valve 46 is arranged at the side of the exhaust pipe 8 rather than the change-over valve 45. Then, the cutoff valve 46 is arranged in the vicinity of the location at which the EGR passage 41 is connected to the exhaust pipe 8. The cutoff valve 46 may be arranged at the most upstream side of the EGR passage 41. Thus, by arranging the cutoff valve 46 at the most upstream side of the EGR passage 41, the volume of the range or space in which exhaust pulsation propagates is made smaller.

Unlike the EGR valve 42, this cutoff valve 46 can only be fully closed and fully opened, but can not maintain any degree of opening between the fully closed position and the fully opened position. This cutoff valve 46 may be any one which changes the passage area of the EGR passage 41, and a pivot valve, a gate valve or the like can be exemplified as such. In addition, the cutoff valve 46 can be made to operate in any manner, and as such a cutoff valve, there can be adopted, for example, a diaphragm valve which is operated by being supplied with the negative pressure in the intake pipe 4, or a motor operated valve which is operated by being supplied with electric power. Then, the cutoff valve 46 according to this embodiment is of a normally open type. In other words, in cases where an operating force is not applied to the cutoff valve 46, this cutoff valve 46 is in a fully opened state. For example, in cases where a diaphragm valve is used, it becomes fully opened when negative pressure is not supplied, and it is fully closed when negative pressure is supplied. Also, in cases where a motor operated valve is used, it becomes fully opened when electric power is not supplied, and it is fully closed when electric power is supplied.

Here, note that in this embodiment, the cutoff valve 46 corresponds to an opening and closing device in the present invention. In addition, although the cutoff valve 46 according to this embodiment is able to maintain only two states, i.e., fully opened and fully closed, there may be adopted a valve which is able to maintain any degree of opening between the fully opened state and the fully closed state. Moreover, the cutoff valve 46 may be of such a structure that permits a small amount of EGR gas to pass therethrough at the time of the fully closed state thereof. In other words, because the cutoff valve 46 is arranged so as to increase the amplitude of exhaust pulsation, the cutoff valve 46 should has a passage area that makes the amplitude of the exhaust pulsation large. That is, the cutoff valve 46 may be such that the degree of opening thereof at a valve closing side is smaller than the degree of opening thereof at a valve opening side, so as to make the amplitude of exhaust pulsation large.

The opening and closing of the intake valve 5 and the exhaust valve 9 are carried out by means of an opening and closing mechanism. Here, the opening and closing operation of the intake valve 5 is carried out by the intake side cam 6. This intake side cam 6 is mounted on an intake side cam shaft 22, and an intake side pulley 24 is arranged at an end of this intake side cam shaft 22. In addition, between the intake side cam shaft 22 and the intake side pulley 24, there is arranged a variable rotational phase mechanism (hereinafter referred to as an "intake side VVT") 23 which is able to change the relative rotational phase therebetween. This intake side WT 23 controls the relative rotational phase between the intake side cam shaft 22 and the intake side pulley 24 according to a command from an ECU 90 which is to be described later.

Here, the opening and closing operation of the exhaust valve 9 is carried out by an exhaust side cam 11. This exhaust side cam 11 is mounted on an exhaust side cam shaft 25, and an exhaust side pulley 27 is arranged at an end of this exhaust side cam shaft 25. In addition, between the exhaust side cam shaft 25 and the exhaust side pulley 27, there is arranged a variable rotational phase mechanism (hereinafter referred to as an "exhaust side VVT") 26 which is able to change the relative rotational phase therebetween. This exhaust side WT 26 controls the relative rotational phase between the exhaust side cam shaft 25 and the exhaust side pulley 27 according to a command from the ECU 90 to be described later.

Then, the rotation driving of the intake side cam shaft 22 and the exhaust side cam shaft 25 is carried out by the driving force of the crankshaft 13. Thus, the intake side cam shaft 22 and the exhaust side cam shaft 25 are driven to rotate by means of the driving force of the crankshaft 13. Then, the opening and closing operations of the intake valve 5 and the exhaust valve 9 are carried out by the intake side cam 6 and the exhaust side cam 11, respectively, which are rotating simultaneously with each other. Here, according to the intake side WT 23, the opening and closing time of the intake valve 5 can be changed. Also, according to the exhaust side WT 26, the opening and closing time of the exhaust valve 9 can be changed. In other words, the time at which the intake valve 5 is opened can be changed by the intake side WT 23, and the time at which the exhaust valve 9 is closed can be changed by the exhaust side WT 26, as a result of which a valve overlap period can be provided or the length of this valve overlap period can be adjusted. Moreover, because the time at which the exhaust valve 9 is opened can be changed according to the exhaust side WT 26, the time or timing at which a trough portion of exhaust pulsation arrives at the exhaust port 7 can be adjusted.

Here, note that the opening and closing times of the intake valve 5 and the exhaust valve 9 may be changed by the use of other devices, in place of the intake side VVT 23 and the exhaust side WT 26. For example, electromagnetically driven valves may be used. In addition, in the intake side VVT 23 and the exhaust side VVT 26 according to this embodiment, the relative rotational phases of the cam shafts and the pulleys are changed, so the angles of action (periods in which the intake valve 5 and the exhaust valve 9 are open, respectively) of the cams themselves do not change, but in place of these intake side VVT 23 and exhaust side VVT 26, there may be used mechanisms which change the angles of action of the cams, respectively.

Further, in the internal combustion engine 1, there is arranged in combination therewith the ECU 90 which is an electronic control unit for controlling the internal combustion engine 1. This ECU 90 is provided with a CPU, a ROM and a RAM which store a variety of kinds of programs and maps, and so on, and it is a unit that controls the operating state, etc., of the internal combustion engine 1 in accordance with the operating conditions of the internal combustion engine 1 and/ or driver's requirements.

Here, an accelerator opening sensor 91 and a crank position sensor 92 in addition to the above-mentioned various kinds of sensors are electrically connected to the ECU 90. The ECU 90 receives a signal corresponding to an accelerator opening from the accelerator opening sensor 91, and calculates an engine load, etc., according to this signal. Also, the ECU 90 receives a signal corresponding to the rotation angle of an output shaft of the internal combustion engine 1 from the crank position sensor 92, and calculates the number of engine revolutions per unit time.

On the other hand, the ECU 90 controls the intake throttle valve 16, the intake side WT 23, the exhaust side VVT 26, the EGR valve 42, the change-over valve 45, and the cutoff valve 46. Here, note that in this embodiment, the ECU 90 which controls the cutoff valve 46 corresponds to a change unit in the present invention. The change unit may change the amplitude of the exhaust pulsation of the internal combustion engine by changing the degree of opening of the opening and closing device.

Then, in this embodiment, the opening and closing times of the intake valve 5 and the exhaust valve 9 are set in such a manner that a trough portion of the exhaust pulsation (a portion in which the pressure of the exhaust gas becomes the lowest) arrive at the exhaust port 7 in the valve overlap period. In other words, the difference between the pressure in the intake port 3 and the pressure in the exhaust port 7 is controlled so as to become the largest in the valve overlap period. When the pressure in the exhaust port 7 is lower than the pressure in the intake port 3 in the valve overlap period, fresh air flows into the interior of the cylinder 2 from the intake port 3, and at the same time, burned gas flows out of the interior of the cylinder 2 into the exhaust port 7. As a result of this, the amount of the burned gas remaining in the cylinder 2 can be made smaller, whereby the torque of the internal combustion engine 1 can be made higher.

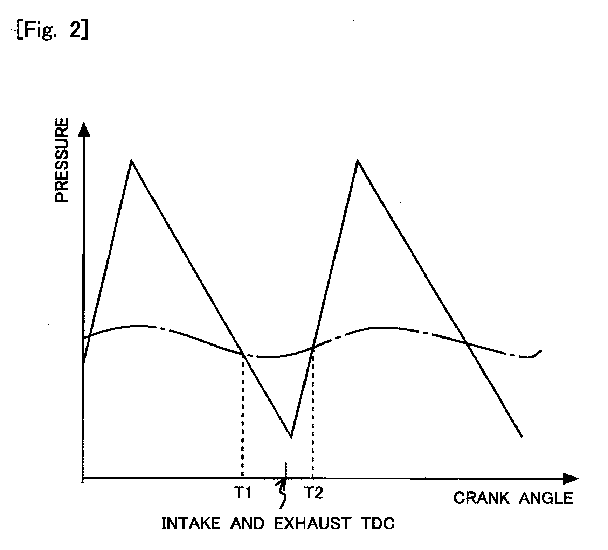

Here, Fig. 2 is a view showing the relation between the pressure of exhaust gas, the pressure of intake air, and a crank angle. A solid line indicates the exhaust gas pressure, and an alternate long and short dash line indicates the intake air pressure. The exhaust gas pressure is the pressure in the exhaust port 7 in the vicinity of the exhaust valve 9, and the intake air pressure is the pressure in the intake port 3 in the vicinity of the intake valve 5. When the crank angle is at intake and exhaust TDC, the piston 15 is at top dead center. Then, in a period of T1 to T2, the exhaust gas pressure is lower than the intake air pressure. In other words, with the provision of a valve overlap period within the period of T1 to T2, fresh air blows from the intake port 3 toward the exhaust port 7. When the pressure of the exhaust gas becomes lower in this period of T1 to T2, the amount of the fresh air which passes through the cylinder 2 in the valve overlap period becomes larger. In addition, as the pressure of the exhaust gas becomes lower, the period of T1 to T2 can be made longer. In other words, by making the amplitude of exhaust pulsation larger, the amount of intake air in the cylinder 2 can be made to increase to a more extent, whereby the amount of burned gas in the cylinder 2 can be made to decrease to a more extent.

Here, note that in order to make the trough portion of the exhaust pulsation overlap with the valve overlap period, it is necessary to set the time or timing at which the exhaust valve 9 begins to open, in an appropriate manner. Because this time changes with the kind of the internal combustion engine or the volume of the exhaust system, an optimum value for this time is calculated through experiments, etc.

Then, in this embodiment, in order to make the amplitude of the exhaust pulsation larger, the cutoff valve 46 is made fully closed. Here, by closing the cutoff valve 46, it is possible to suppress the exhaust gas from flowing into the EGR passage 41 downstream of the cutoff valve 46. In other words, by closing the cutoff valve 46, the volume of the exhaust system related to the magnitude of the amplitude of the exhaust pulsation can be made small.

Then, the cutoff valve 46 is closed in an operating range in which the engine torque goes up in an effective manner by discharging the burned gas from the interior of the cylinder 2. For that reason, in this embodiment, the cutoff valve 46 is closed at the time of the low rotation and high load of the internal combustion engine 1. A full load is also included in this high load. Here, the supercharging pressure becomes high at the time of high load, so the pressure in the intake pipe 4 becomes higher than the pressure in the exhaust pipe 8, and hence the supply of the EGR gas becomes difficult. For that reason, in this embodiment, the supply of the EGR gas is stopped at the time of the low rotation and high load of the internal combustion engine 1. In other words, there will be no problem even if the flow of the EGR gas is stopped by closing the cutoff valve 46 at the time of the low rotation and high load. In addition, although the state of combustion becomes unstable at the time of the low rotation and high load, the combustion state can be stabilized by taking more fresh air into the cylinder 2, so the torque of the internal combustion engine 1 can be increased. In other operating states, the supply of the EGR gas is necessary, or the operational effect obtained by closing the cutoff valve 46 is low, so the cutoff valve 46 is made fully opened.

However, because the cutoff valve 46 is arranged in the vicinity of the exhaust pipe 8, the HC discharged from the cylinder 2 is liable to adhere to the cutoff valve 46. In addition, because the location of the cutoff valve 46 is a position in which the exhaust gas of high temperature flows through, the HC thus adhered is easy to solidify. Thus, there is a possibility that the cutoff valve 46 may be stuck or fixed, and the opening and closing of this cutoff valve 46 may become difficult.

Accordingly, in this embodiment, the HC adhered to the cutoff valve 46 is desorbed therefrom by causing the cutoff valve 46 to open and close in a periodic manner. As a result of this, the sticking or fixing of the exhaust valve 46 is suppressed or prevented. However, the supply of the EGR gas can not be made at the time when the cutoff valve 46 is closed, the closing of this cutoff valve 46 is carried out when it is not necessary to supply the EGR gas. In addition, the cutoff valve 46 is maintained in the fully closed state during the time of the low rotation and high load in which the cutoff valve 46 is made fully closed so as to increase the amplitude of the exhaust pulsation, so the opening and closing thereof for desorbing the HC are not carried out.

. Here, note that the cutoff valve 46 is usually maintained in the fully opened state except during the time of the low rotation and high load. For that reason, in order to desorb the HC, the cutoff valve 46 is first made into a fully closed state, and is then returned to a fully opened state. Although the HC is desorbed by carrying out these operations a plurality of times, it is effective even if these operations are carried out only once.

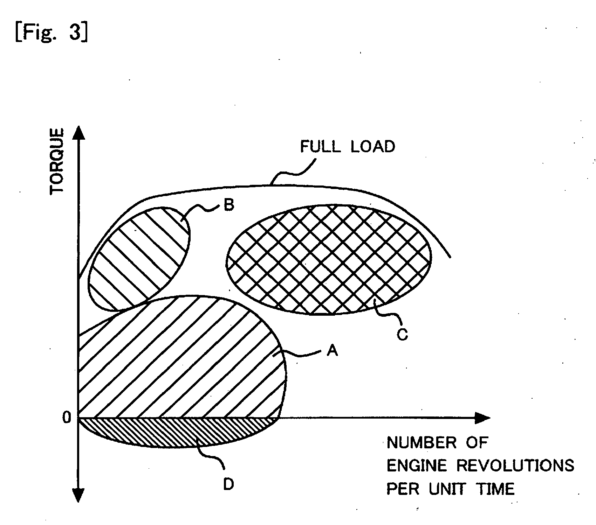

Fig. 3 is a view showing the relation between the operating state of the internal combustion engine and the cutoff valve 46. The axis of abscissa represents the number of engine revolutions per minute, and the axis of ordinate represents the engine torque. An operating range A is a low rotation and low load operating range, and is an operating range in which the EGR gas is introduced into the cylinder 2. An operating range B is a low rotation and high load operating range, and is an operating range in which the cutoff valve is made fully closed. An operating range C is a high rotation and high load operating range. An operating range D is an operating range at the time of deceleration.

In other words, in the operating range A, it is necessary to introduce the EGR gas into the interior of the cylinder 2, so the opening and closing of the cutoff valve 46 for desorbing the HC are not carried out. In the operating range B, it is necessary to make large the amplitude of the exhaust pulsation, so the opening and closing of the cutoff valve 46 for desorbing the HC are not carried out. In the operating range C, the pressure of the exhaust gas rises by closing the cutoff valve 46, so there is a possibility that the number of revolutions per unit time of the turbocharger 50 may go up excessively. For that reason, only in cases where the number of revolutions per unit time of the turbocharger 50 does not goes up excessively, the opening and closing of the cutoff valve 46 is carried out. In the operating range D, the supply of fuel to the internal combustion engine 1 is stopped, so even if the cutoff valve 46 is opened and closed, there is no influence on the combustion state of fuel, as a result of which the opening and closing of the cutoff valve 46 for desorbing the HC is carried out. Even in other operating ranges (e.g., in the high rotation and low load operating range), only in cases where it is not necessary to supply the EGR gas and the number of revolutions per unit time of the turbocharger 50 does not go up excessively, it is possible to carry out the opening and closing of the cutoff valve 46. Here, note that in this embodiment, the ECU 90, which determines whether the operating state (the number of revolutions per unit time and the torque) of the internal combustion engine 1 is in the operating range A of Fig. 3 corresponds to an EGR gas supply determination unit in the present invention.

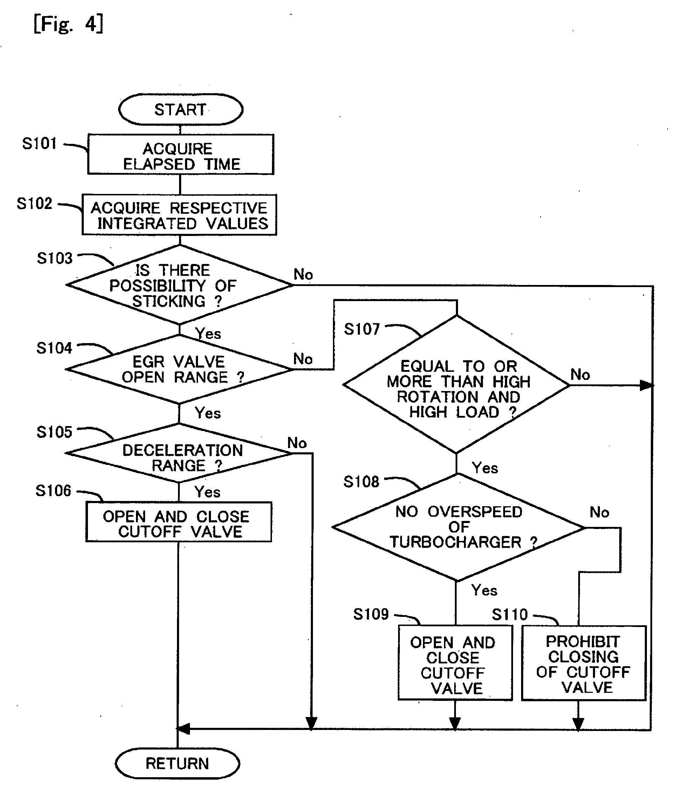

Next, Fig. 4 is a flow chart showing a flow for opening and closing control of the cutoff valve 46 according to this embodiment. This routine is carried out in a repeated manner by means of the ECU 90 at each predetermined time interval. Here, note that this routine can be applied even if a cutoff valve of a type other than the normally open type is adopted as the cutoff valve 46.

In step S101, an elapsed time after the opening or closing of the cutoff valve 46 for HC desorption was carried out last time is acquired. This elapsed time is measured by the ECU 90. It is considered that the longer this elapsed time, the more the amount of HC adhered to the cutoff valve 46 becomes.

In step S102, the accumulated or integrated values of various kinds of values related to the solidification of HC are acquired. These integrated values are values which are obtained from the last time, at which the opening or closing of the cutoff valve 46 for HC desorption was carried out, to the current time, and they are reset by closing or opening the cutoff valve 46. For example, the higher the temperature of the exhaust gas, the more the solidification of HC is facilitated, and hence, the temperature of the exhaust gas has been integrated. Also, the more the amount of the HC discharged from the internal combustion engine 1, the more the amount of the HC adhered to the cutoff valve 46 becomes, and so the amount of discharge of the HC from the internal combustion engine 1 may have been integrated. These values may be measured by sensors, or may be estimated from the operating state (the number of engine revolutions per unit time and the torque) of the internal combustion engine 1.

In step S103, it is determined whether there is any possibility that the cutoff valve 46 may become out of operation due to the solidification of HC. Here, such a determination is made based on the values acquired in step S101 and step S102. For example, in cases where one or both of the elapsed time obtained in step S101 and the integrated values obtained in step S102 exceed(s) a threshold value(s), a determination is made that there is a possibility that the cutoff valve 46 may become out of operation. Optimum values for the threshold values have beforehand been obtained through experiments, etc. In cases where an affirmative determination is made in step S103, the routine advances to step S104, whereas in cases where a negative determination is made, this routine is ended.

In step S104, it is determined whether the internal combustion engine 1 is operated in an operating range in which the EGR valve 42 is opened. In other words, it is determined whether the internal combustion engine 1 is in an operating state in which the EGR gas can be supplied into the cylinder 2. In this step, it is determined whether the operating state of the internal combustion engine 1 is in the operating range A or D in Fig. 3. In cases where an affirmative determination is made in step S104, the routine advances to step S105, whereas in cases where a negative determination is made, the routine advances to step S107. Here, note that when a negative determination is made in step S104, it can be said that the operating state of the internal combustion engine 1 is at times other than an operating state in which the EGR gas is supplied.

In step S105, it is determined whether the internal combustion engine 1 is operated in a deceleration range. That is, it is determined whether the operating state of the internal combustion engine 1 is in the operating range D in Fig. 3. It can be said that in this step, it is determined whether the operating state of the internal combustion engine 1 is in an operating state in which there is no need to supply the EGR gas even if the EGR valve 42 is open. In cases where an affirmative determination is made in step S105, the routine advances to step S106, whereas in cases where a negative determination is made, the cutoff valve 46 can not be closed, and hence this routine is ended. Here, note that when an affirmative determination is made in step S105, it can be said that t the operating state of the internal combustion engine 1 is at times other than an operating state in which the EGR gas is supplied. On the other hand, when a negative determination is made, it can be said that the operating state of the internal combustion engine 1 is in an operating state in which the EGR gas is supplied. Here, note that in this embodiment, the ECU 90, which carries out the processing of step S104 or step S105, can be made to correspond to an EGR gas supply determination unit in the present invention.

In step S106, the opening and closing of the cutoff valve 46 is carried out. In order to circulate the EGR gas, the cutoff valve 46 is opened at first. In other words, the cutoff valve 46 is first caused to operate in a closing direction, and immediately after fully closed, it is then caused to operate in an opening direction so that it is fully opened. These operations are carried out a predetermined number of times. Alternatively, these operations may be carried out in a repeated manner over the time of deceleration.

Subsequently, in step S107, it is determined whether the internal combustion engine 1 is operated in the high rotation and high load operating range. That is, it is determined whether the operating state of the internal combustion engine 1 is in the operating range C in Fig. 3. In this step, it is determined whether the operating state of the internal combustion engine 1 is an operating state in which the supply of the EGR gas is not required and there is also no requirement to make large the amplitude of the exhaust pulsation. In cases where an affirmative determination is made in step S107, the routine advances to step S108, whereas in cases where a negative determination is made, this routine is ended.

In step S108, it is determined whether the turbocharger 50 is not put into an overspeed state when it is assumed that the cutoff valve 46 has been closed. In this case, it may also be determined whether the number of revolutions per unit time of the turbocharger 50 does not exceed a threshold value, or it may also be determined whether the number of revolutions per unit time of the turbocharger 50 becomes equal to or less than a threshold value. In other words, in this step, it is determined whether the number of revolutions per unit time of the turbocharger 50 becomes within an allowable range, even if the cutoff valve 46 is closed.

For example, as the pressure of the exhaust gas becomes high, the number of revolutions per unit time of the turbocharger 50 goes up. In other words, there is a correlation between the pressure of the exhaust gas and the number of revolutions per unit time of the turbocharger 50. In cases where the pressure of the exhaust gas at the current time exceeds the threshold value, a determination can be made that the number of revolutions per unit time of the turbocharger 50 exceeds the threshold value by closing the cutoff valve 46.

In addition, the larger the flow rate of the exhaust gas, the higher the number of revolutions per unit time of the turbocharger 50 becomes. In other words, in cases where the amount of intake air related to the flow rate of the exhaust gas exceeds a threshold value, it can be determined that the number of revolutions per unit time of the turbocharger 50 exceeds the threshold value.

In cases where an affirmative determination is made in step S108, the routine advances to step S109, in which the cutoff valve 46 is opened or closed, similar to step S106. On the other hand, in cases where a negative determination is made in step S108, there is a possibility that the turbocharger 50 may carry out overspeed rotation, so the routine advances to step S110, in which the cutoff valve 46 is prohibited from being closed.

In this manner, the sticking or fixing of the exhaust valve 46 can be suppressed. Here, note that in this embodiment, the ECU 90, which carries out the processing of the step S108, corresponds to a rotation number determination unit in the present invention. Also, in this embodiment, the ECU 90, which carries out the processing of step S110, corresponds to a prohibition unit in the present invention.

As described above, according to this embodiment, the cutoff valve 46 is arranged separately from the EGR valve 42 or the change-over valve 45, and hence the volume of the EGR passage 41 can be excluded from the range in which exhaust pulsation propagates. As a result of this, the amplitude of the exhaust pulsation can be made large, so the amount of fresh air sucked into each cylinder can be made to increase. Accordingly, it is possible to increase engine torque. In addition, because the cutoff valve 46 is of the normally open type, the EGR gas can be made to pass therethrough even immediately after starting of the internal combustion engine 1 or at the time of failure of the cutoff valve, so the amount of emission of NOx can be decreased.

In addition, the sticking or fixing of the cutoff valve 46 can be suppressed by causing the cutoff valve 46 to open and close in a repeated manner at the time of a high rotation and high load operation in which the supply of EGR gas is stopped, or at the time of deceleration in which there is no need to supply EGR gas. Moreover, at the time of the high rotation and high load operation, the cutoff valve 46 is made to open and close in a range in which the number of revolutions per unit time of the turbocharger 50 does not go up excessively, so it is possible to suppress the overspeed of the turbocharger 50.

Here, note that in this embodiment, the cutoff valve 46 is made to open and close in a repeated manner at the time of the high rotation and high load operation in which the supply of EGR gas is stopped, or at the time of deceleration in which there is no need to supply EGR gas, but even in other operating states, the opening and closing of the cutoff valve 46 can be carried out if the same condition is satisfied.

### [Second Embodiment]

Here, even if the opening and closing of the cutoff valve 46 as explained in the first embodiment are carried out, there is a possibility that the cutoff valve 46 may be stuck or fixed. In addition, it is also considered that the cutoff valve 46 may fail due to the heat of the exhaust gas. Accordingly, in this embodiment, it is detected that the cutoff valve 46 has become out of operation. The other devices, parts and so on are the same as those in the first embodiment, so the explanation thereof is omitted. Here, it is assumed as a precondition that the EGR valve 42 is operating normally. Because the EGR .. valve 42 is less liable to rise in temperature than the cutoff valve 46, for example, a sensor can be mounted on the EGR valve 42 for measuring the degree of opening thereof. According to this sensor, a determination can be made as to whether the EGR valve 42 is operating normally.

. First, consideration will be given to the case where the cutoff valve 46 has become unable to be opened while being kept closed. In other words, it is a case where the cutoff valve 46 can not be opened even if one tries to open it. In such a case, because the circulation of the EGR gas is interrupted, the amount of EGR gas may be decreased or it may not be supplied at all in spite of the engine being in an operating state in which the EGR gas is supplied. In other words, in cases where the amount of EGR gas is less than an estimated value, a determination can be made that the cutoff valve 46 is in a stopped state while being kept closed.

Here, it is considered that in cases where the amount of the EGR gas, though flowing through the EGR passage 41, is less than the estimated value, the cutoff valve 46 is stopped, though not fully opened, at a degree of opening between the fully opened state and the fully closed state. The degree of opening of the cutoff valve 46 can also be determined in accordance with the difference between an actual amount of EGR gas and an estimated value thereof.

Next, consideration will be given to the case where the cutoff valve 46 has become unable to be closed while being kept open. In other words, this is a case where the cutoff valve 46 can not be closed even if one tries to close it. In such a case, the amplitude of the exhaust pulsation does not become large even if one tires to make it large, so the amount of intake air introduced into each cylinder 2 decreases. For this reason, the volumetric efficiency of the engine becomes small. In other words, in cases where the volumetric efficiency is less than an estimated value thereof, a determination can be made that the cutoff valve 46 is in the stopped state while being kept open.

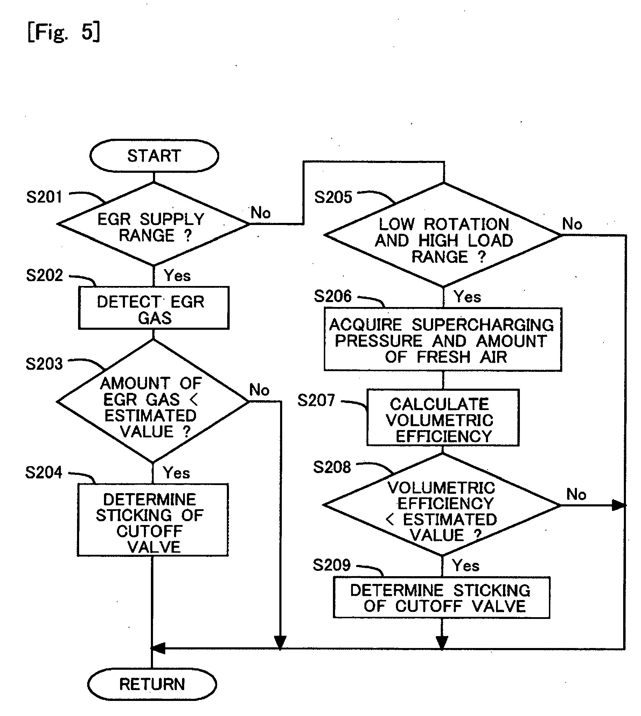

Fig. 5 is a flow chart showing a flow or routine for abnormality determination of the cutoff valve 46 according to this second embodiment. This routine is carried out in a repeated manner by means of the ECU 90 at each predetermined time interval. Here, note that this routine can be applied even if a cutoff valve of a type other than the normally open type is adopted as the cutoff valve 46.

In step S201, it is determined whether the internal combustion engine 1 is operated in an operating range in which EGR gas is supplied into each cylinder 2. That is, in this embodiment, it is determined whether the operating state of the internal combustion engine 1 is in the operating range A in Fig. 3. In order to determine, based on an amount of EGR gas, whether the cutoff valve 46 is put into an inoperative state while being kept closed, it is determined whether the supply of EGR gas, which is the precondition, is carried out. In cases where an affirmative determination is made in step S201, the routine advances to step S202, whereas in cases where a negative determination is made, the routine advances to step S205.

In step S202, the amount of EGR gas is detected. An amount of gas sucked into each cylinder 2 is calculated based on, for example, the number of engine revolutions per unit time, the engine load, the pressure in the intake pipe 4, and so on. The relations therebetween have beforehand been obtained through experiments, etc. Although fresh air and EGR gas are included in the amount of gas sucked into each cylinder 2, an amount of fresh air can be measured by means of the air flow meter 95, and hence the remainder in the amount of gas becomes the amount of EGR gas.

In step S203, it is determined whether the actual amount of EGR gas detected in step S202 is less than an estimated value. This estimated value may also be a lower limit value of the amount of EGR gas which is detected during the time the cutoff valve 46 is operating normally. The estimated value has been beforehand obtained in association with the operating state of the internal combustion engine 1, through experiments, etc. In other words, in cases where the actual amount of EGR gas is less than the estimated value, a determination can be made that the cutoff valve 46 has become unable to be opened while being kept closed. In cases where an affirmative determination is made in step S203, the routine advances to step S204, whereas in cases where a negative determination is made, it is assumed that the cutoff valve 46 is open, and hence, this routine is ended.

In step S204, a determination is made that the cutoff valve 46 has become out of operation with the cutoff valve 46 being kept closed. A determination may also be made that the cutoff valve 46 is stuck closed. In this case, an alarm lamp may be made to turn on, or a warning buzzer may be sounded. In addition, any other control able to suppress the generation of NOx may be carried out.

Subsequently, in step S205, it is determined whether the internal combustion engine 1 is operated in the low rotation and high load operating range. That is, it is determined whether the operating state of the internal combustion engine 1 is in the operating range B in Fig. 3. In this step, it is determined whether the operating state of the internal combustion engine 1 is an operating state in which the supply of the EGR gas is stopped and the cutoff valve 46 is closed. That is, in order to determine whether the cutoff valve 46 is put into an inoperative state while being kept open, it is determined whether the internal combustion engine 1 is in an operating state in which the cutoff valve 46 is closed, which is the precondition. In cases where an affirmative determination is made in step S205, the routine advances to step S206, whereas in cases where a negative determination is made, an abnormality determination can not be made, and hence this routine is ended.

In step S206, the supercharging pressure and the amount of fresh air are detected. In other words, the values which are needed for the calculation of the volumetric efficiency are acquired.

In step S207, the volumetric efficiency is detected. Here, a well-known formula can be used for that purpose.

In step S208, it is determined whether the actual volumetric efficiency calculated in step S207 is lower than an estimated value. This estimated value may also be a lower limit value of the volumetric efficiency which is detected during the time the cutoff valve 46 is operating normally. In other words, in cases where the actual volumetric efficiency is lower than the estimated value, a determination can be made that the cutoff valve 46 has become unable to be closed while being kept open. In cases where an affirmative determination is made in step S208, the routine advances to step S209, whereas in cases where a negative determination is made, it is assumed that the cutoff valve 46 is closed, and hence, this routine is ended.

In step S209, a determination is made that the cutoff valve 46 has become out of operation with the cutoff valve 46 being kept open. A determination may also be made that the cutoff valve 46 is stuck open. In this case, the alarm lamp may be made to turn on, or the warning buzzer may be sounded. In addition, control may also be made according to the amplitude of the exhaust pulsation which becomes smaller.

Here, note that in this embodiment, the ECU 90, which carries out the processing of the steps S203 and S204, or the processing of the steps S208 and S209, corresponds to an abnormality determination unit in the present invention.

As described above, according to this embodiment, it is possible to determine the abnormality of the cutoff valve 46.

## Claims

1. A control apparatus of an internal combustion engine (1) which includes:
an EGR passage (41) that connects between an intake passage (4) and an exhaust passage (8) of the internal combustion engine (1) so as to circulate a part of an exhaust gas from the internal combustion engine (1) as an EGR gas;
an EGR valve (42) that is arranged at a location between opposite ends of said EGR passage (41) so as to adjust a flow rate of the EGR gas by adjusting a passage area of said EGR passage (41);
a cutoff valve (46) of a normally open type that opens and closes said EGR passage (41) which is at an upstream side of said EGR valve (42) and which is in the vicinity of a location at which said EGR passage (41) is connected to said exhaust passage (8);
an ECU (90);
an opening and closing mechanism for opening and closing an intake valve (5) and an exhaust valve (9), respectively, according to a command from the ECU (90);and
a turbocharger (50) that is arranged on the exhaust passage (8) at a downstream side of a location at which said EGR passage (41) is connected to said exhaust passage (8);
wherein
said ECU (90) includes a change unit for opening and closing said cutoff valve (46);
said change unit closes said cutoff valve (46) at the time of a low rotation and high load operation of said internal combustion engine (1);
said change unit opens said cutoff valve (46) in other operating states; and
said ECU (90) sets opening and closing times of the intake valve (5) and the exhaust valve (9) such that a difference between a pressure in an intake port (3) and a pressure in an exhaust port (7) is the largest in a valve overlap period of the intake valve (5) and the exhaust valve (9),
**characterized in that**
said ECU (90) includes:
a rotation number determination unit that determines whether the number of revolutions per unit time of said turbocharger (50) exceeds a threshold value at the time when said cutoff valve (46) is closed; and
a prohibition unit that prohibits said cutoff valve (46) from being closed, when a determination is made by said rotation number determination unit that the number of revolutions per unit time of said turbocharger (50) exceeds the threshold value.

2. The control apparatus of an internal combustion engine (1) as set forth in claim 1, **characterized by** further comprising:
an EGR gas supply determination unit (90) that determines whether the operating state of said internal combustion engine (1) is an operating state in which the EGR gas is supplied, wherein said cutoff valve (46) is opened and closed at times other than when said internal combustion engine (1) is in the operating state in which the EGR gas is supplied.

3. The control apparatus of an internal combustion engine (1) as set forth in claim 1, **characterized in that**
said cutoff valve (46) is opened and closed during the time said EGR valve (42) is closed.

4. A control apparatus of an internal combustion engine (1) which includes:
an EGR passage (41) that connects between an intake passage (4) and an exhaust passage (8) of the internal combustion engine (1) so as to circulate a part of an exhaust gas from the internal combustion engine (1) as an EGR gas;
an EGR valve (42) that is arranged at a location between opposite ends of said EGR passage (41) so as to adjust a flow rate of the EGR gas by adjusting a passage area of said EGR passage (41);
an EGR gas supply determination unit (90) that determines whether the operating state of said internal combustion engine (1) is an operating state in which the EGR gas is supplied;
a cutoff valve (46) that opens and closes said EGR passage (41) which is at an upstream side of said EGR valve (42) and which is in the vicinity of a location at which said EGR passage (41) is connected to said exhaust passage (8);
an ECU (90);
an opening and closing mechanism for opening and closing an intake valve (5) and an exhaust valve (9), respectively, according to a command from the ECU (90); and
a turbocharger (50) that is arranged on the exhaust passage (8) at a downstream side of a location at which said EGR passage (41) is connected to said exhaust passage (8);
wherein
said ECU (90) includes a change unit for opening and closing said cutoff valve (46);
said change unit closes said cutoff valve (46) at the time of a low rotation and high load operation of said internal combustion engine (1);
said cutoff valve (46) is opened and closed at times other than when said internal combustion engine is in the operating state in which the EGR gas is supplied;
said change unit opens said cutoff valve (46) in other operating states; and
said ECU (90) sets opening and closing times of the intake valve (5) and the exhaust valve (9) such that a difference between a pressure in an intake port (3) and a pressure in an exhaust port (7) is the largest in a valve overlap period of the intake valve (5) and the exhaust valve (9),
**characterized in that**
said ECU (90) includes:
a rotation number determination unit that determines whether the number of revolutions per unit time of said turbocharger (50) exceeds a threshold value at the time when said cutoff valve (46) is closed; and
a prohibition unit that prohibits said cutoff valve (46) from being closed, when a determination is made by said rotation number determination unit that the number of revolutions per unit time of said turbocharger (50) exceeds the threshold value.

5. The control apparatus of an internal combustion engine (1) as set forth in any one of claims 1 through 4, **characterized by** further comprising:
an abnormality determination unit (90) that makes a determination that said change unit (90) has an abnormality, when said EGR valve (42) is open and when the amount of EGR gas supplied to said internal combustion engine (1) is less than an estimated value.

6. The control apparatus of an internal combustion engine (1) as set forth in any one of claims 1 through 4, **characterized by** further comprising:
an abnormality determination unit (90) that makes a determination that said change unit (90) has an abnormality, when a volumetric efficiency of said internal combustion engine (1) is lower than an estimated value.

## Patentansprüche

1. Steuerungsvorrichtung eines Verbrennungsmotors (1) mit:
einer AGR-Leitung (41), welche eine Verbindung zwischen einer Einlassleitung (4) und einer Auslassleitung (8) des Verbrennungsmotors (1) herstellt, um einen Teil eines Abgases des Verbrennungsmotors (1) als ein AGR-Gas zirkulieren zu lassen;
einem AGR-Ventil (42), welches an einer Stelle zwischen gegenüberliegenden Enden der AGR-Leitung (41) angeordnet ist, um einen Durchsatz an AGR-Gas durch Anpassen eines Leitungsbereichs der AGR-Leitung anzupassen;
einem normalerweise offenen Absperrventil (46), welches die AGR-Leitung (41) öffnet und schließt, welches auf einer stromaufwärtigen Seite des AGR-Ventils (42) ist und welches in der Nähe einer Stelle ist, an der die AGR-Leitung (41) mit der Auslassleitung (8) verbunden ist;
einem elektronischen Steuergerät (90);
einem Öffnungs- und Schließungsmechanismus zum Öffnen und Schließen eines Einlassventils (5) beziehungsweise eines Auslassventils (9) gemäß einem Befehl von dem elektronischen Steuergerät (90); und
einem Turbolader (50), welcher in der Auslassleitung (8) auf einer strömabwärtigen Seite einer Stelle angeordnet ist, an der die AGR-Leitung (41) mit der Auslassleitung (8) verbunden ist;
wobei
das elektronische Steuergerät (90) eine Schalteinheit zum Öffnen und Schließen des Absperrventils (46) aufweist;
die Schalteinheit das Absperrventil (46) während eines Niederdrehzahl- und Hochlastbetriebs des Verbrennungsmotors (1) schließt;
die Schalteinheit das Absperrventil (46) zu anderen Betriebszuständen öffnet; und
das elektronische Steuergerät (90) Öffnungs- und Schließungszeiten des Einlassventils (5) und des Auslassventils (9) so festlegt, dass eine Differenz zwischen einem Druck in einer Einlassöffnung (3) und einem Druck in einer Auslassöffnung (7) während einer Ventilüberschneidungszeit des Einlassventils (5) und des Auslassventils (9) am größten ist,
**dadurch gekennzeichnet, dass**
das elektronische Steuergerät (90) aufweist:
eine Drehzahlermittlungseinheit, welche ermittelt, ob die Anzahl an Umdrehungen pro Zeiteinheit des Turboladers (50) einen Grenzwert zu einer Zeit überschreitet, zu der das Absperrventil (46) geschlossen ist; und
eine Verhinderungseinheit, welche verhindert, dass das Absperrventil (46) geschlossen wird, wenn die Drehzahlermittlungseinheit ermittelt, dass die Anzahl an Umdrehungen pro Zeiteinheit des Turboladers (50) den Grenzwert überschreitet.

2. Steuerungsvorrichtung eines Verbrennungsmotors (1) nach Anspruch 1,
**gekennzeichnet durch**
eine AGR-Gaseinspeisungsermittlungseinheit (90), welche ermittelt, ob der Betriebszustand des Verbrennungsmotors (1) ein Betriebszustand ist, in dem das AGR-Gas eingespeist wird, wobei das Absperrventil (46) zu anderen Zeiten geöffnet und geschlossen wird als wenn der Verbrennungsmotor (1) in dem Betriebszustand ist, in dem das AGR-Gas eingespeist wird.

3. Steuerungsvorrichtung eines Verbrennungsmotors (1) nach Anspruch 1,
**dadurch gekennzeichnet, dass**
das Absperrventil (46) während Zeiten geöffnet und geschlossen wird, zu denen das AGR-Ventil (42) geschlossen ist.

4. Steuerungsvorrichtung eines Verbrennungsmotors (1) mit:
einer AGR-Leitung (41), welche eine Verbindung zwischen einer Einlassleitung (4) und einer Auslassleitung (8) des Verbrennungsmotors (1) herstellt, um einen Teil eines Abgases des Verbrennungsmotors (1) als ein AGR-Gas zirkulieren zu lassen;
einem AGR-Ventil (42), welches an einer Stelle zwischen gegenüberliegenden Enden der AGR-Leitung (41) angeordnet ist, um einen Durchsatz an AGR-Gas durch Anpassen eines Leitungsbereichs der AGR-Leitung anzupassen;
einer AGR-Gaseinspeisungsermittlungseinheit (90), welche ermittelt, ob der Betriebszustand des Verbrennungsmotors (1) ein Betriebszustand ist, in dem das AGR-Gas eingespeist wird;
einem Absperrventil (46), welches die AGR-Leitung (41) öffnet und schließt, welches auf einer stromaufwärtigen Seite des AGR-Ventils (42) ist und welches in der Nähe einer Stelle ist, an der die AGR-Leitung (41) mit der Auslassleitung (8) verbunden ist;
einem elektronischen Steuergerät (90);
einem Öffnungs- und Schließungsmechanismus zum Öffnen und Schließen eines Einlassventils (5) beziehungsweise eines Auslassventils (9) gemäß einem Befehl von dem elektronischen Steuergerät (90); und
einem Turbolader (50), welcher in der Auslassleitung (8) auf einer strömabwärtigen Seite einer Stelle angeordnet ist, an der die AGR-Leitung (41) mit der Auslassleitung (8) verbunden ist;
wobei
das elektronische Steuergerät (90) eine Schalteinheit zum Öffnen und Schließen des Absperrventils (46) aufweist;
die Schalteinheit das Absperrventil (46) während eines Niederdrehzahl- und Hochlastbetriebs des Verbrennungsmotors (1) schließt;
das Absperrventil (46) zu anderen Zeiten geöffnet und geschlossen wird als wenn der Verbrennungsmotor (1) in dem Betriebszustand ist, in dem das AGR-Gas eingespeist wird;
die Schalteinheit das Absperrventil (46) in anderen Betriebszuständen öffnet; und
das elektronische Steuergerät (90) Öffnungs- und Schließungszeiten des Einlassventils (5) und des Auslassventils (9) so festlegt, dass eine Differenz zwischen einem Druck in einer Einlassöffnung (3) und einem Druck in einer Auslassöffnung (7) während einer Ventilüberschneidungszeit des Einlassventils (5) und des Auslassventils (9) am größten ist,
**dadurch gekennzeichnet, dass**
das elektronische Steuergerät (90) aufweist:
eine Drehzahlermittlungseinheit, welche ermittelt, ob die Anzahl an Umdrehungen pro Zeiteinheit des Turboladers (50) einen Grenzwert zu einer Zeit überschreitet, zu der das Absperrventil (46) geschlossen ist; und
eine Verhinderungseinheit, welche verhindert, dass das Absperrventil (46) geschlossen wird, wenn die Drehzahlermittlungseinheit ermittelt, dass die Anzahl an Umdrehungen pro Zeiteinheit des Turboladers (50) den Grenzwert überschreitet.

5. Steuerungsvorrichtung eines Verbrennungsmotors (1) nach einem der Ansprüche 1 bis 4,
**gekennzeichnet, durch**
eine Unregelmässigkeitsermittlungseinheit (90), welche eine Unregelmäßigkeit bei der Schalteinheit (90) ermittelt, wenn das AGR-Ventil (42) geöffnet ist und wenn der Umfang an zum Verbrennungsmotor (1) gefördertem AGR-Gas kleiner ist als ein veranschlagter Wert.

6. Steuerungsvorrichtung eines Verbrennungsmotors (1) nach einem der Ansprüche 1 bis 4,
**gekennzeichnet, durch**
eine Unregelmässigkeitsermittlungseinheit (90), welche eine Unregelmäßigkeit bei der Schalteinheit (90) ermittelt, wenn eine Volumeneffizienz des Verbrennungsmotor (1) kleiner ist als ein veranschlagter Wert.

## Revendications

1. Appareil de commande d'un moteur à combustion interne (1) qui comprend :
un passage d'EGR (41) qui relie un passage d'admission (4) et un passage d'échappement (8) du moteur à combustion interne (1) de manière à faire circuler une partie d'un gaz d'échappement du moteur à combustion interne (1) en tant que gaz d'EGR ;
une soupape d'EGR (42) qui est agencée à un emplacement entre les extrémités opposées dudit passage d'EGR (41) de manière à ajuster un débit du gaz d'EGR en ajustant une aire de passage dudit passage d'EGR (41) ;
une soupape de coupure (46) d'un type normalement ouvert qui ouvre et ferme ledit passage d'EGR (41) qui est d'un côté amont de ladite soupape d'EGR (42) et qui est dans le voisinage d'un emplacement auquel ledit passage d'EGR (41) est relié au dit passage d'échappement (8) ;
une ECU (90) ;
un mécanisme d'ouverture et de fermeture pour ouvrir et fermer une soupape d'admission (5) et une soupape d'échappement (9), respectivement, conformément à une commande provenant de l'ECU (90) ; et
un turbocompresseur (50) qui est agencé sur le passage d'échappement (8) d'un côté aval d'un emplacement auquel ledit passage d'EGR (41) est relié au dit passage d'échappement (8) ;
dans lequel
ladite ECU (90) comprend une unité de changement pour ouvrir et fermer ladite soupape de coupure (46) ;
ladite unité de changement ferme ladite soupape de coupure (46) lors d'une rotation à faible vitesse et lors d'un fonctionnement à charge élevée dudit moteur à combustion interne (1) ;
ladite unité de changement ouvre ladite soupape de coupure (46) dans les autres états de fonctionnement ; et
ladite ECU (90) établit les temps d'ouverture et de fermeture de la soupape d'admission (5) et de la soupape d'échappement (9) de sorte qu'une différence entre une pression dans un orifice d'admission (3) et une pression dans un orifice d'échappement (7) soit la plus grande pendant une période de superposition de soupapes de la soupape d'admission (5) et de la soupape d'échappement (9),
**caractérisé en ce que**
ladite ECU (90) comprend :
une unité de détermination de nombre de rotations qui détermine si le nombre de rotations par unité de temps dudit turbocompresseur (50) dépasse une valeur de seuil à l'instant auquel ladite soupape de coupure (46) est fermée ; et
une unité d'interdiction qui interdit la fermeture de ladite soupape de coupure (46), lorsqu'il est déterminé par ladite unité de détermination de nombre de rotations que le nombre de rotations par unité de temps dudit turbocompresseur (50) dépasse la valeur de seuil.

2. Appareil de commande d'un moteur à combustion interne (1) selon la revendication 1, **caractérisé en ce qu'**il comprend en outre :
une unité de détermination de fourniture de gaz d'EGR (90) qui détermine si l'état de fonctionnement dudit moteur à combustion interne (1) est un état de fonctionnement dans lequel le gaz d'EGR est fourni, dans lequel ladite soupape de coupure (46) est ouverte et fermée aux instants autres que lorsque ledit moteur à combustion interne (1) est dans l'état de fonctionnement dans lequel le gaz d'EGR est fourni.

3. Appareil de commande d'un moteur à combustion interne (1) selon la revendication 1, **caractérisé en ce que**
ladite soupape de coupure (46) est ouverte et fermée pendant le temps pendant lequel ladite soupape d'EGR (42) est fermée.

4. Appareil de commande d'un moteur à combustion interne (1) qui comprend :
un passage d'EGR (41) qui relie un passage d'admission (4) et un passage d'échappement (8) du moteur à combustion interne (1) de manière à faire circuler une partie d'un gaz d'échappement provenant du moteur à combustion interne (1) en tant que gaz d'EGR ;
une soupape d'EGR (42) qui est agencée à un emplacement entre les extrémités opposées dudit passage d'EGR (41) de manière à ajuster un débit du gaz d'EGR en ajustant une aire de passage dudit passage d'EGR (41) ;
une unité de détermination de fourniture de gaz d'EGR (90) qui détermine si l'état de fonctionnement dudit moteur à combustion interne (1) est un état de fonctionnement dans lequel le gaz d'EGR est fourni ;
une soupape de coupure (46) qui ouvre et ferme ledit passage d'EGR (41) qui est d'un côté amont de ladite soupape d'EGR (42) et qui est dans le voisinage d'un emplacement auquel ledit passage d'EGR (41) est relié au dit passage d'échappement (8) ;
une ECU (90) ;
un mécanisme d'ouverture et de fermeture pour ouvrir et fermer une soupape d'admission (5) et une soupape d'échappement (9), respectivement, conformément à une commande provenant de l'ECU (90) ; et
un turbocompresseur (50) qui est agencé sur le passage d'échappement (8) d'un côté aval d'un emplacement auquel ledit passage d'EGR (41) est relié au dit passage d'échappement (8) ;
dans lequel
ladite ECU (90) comprend une unité de changement pour ouvrir et fermer ladite soupape de coupure (46) ;
ladite unité de changement ferme ladite soupape de coupure (46) lors d'une rotation à faible vitesse et lors d'un fonctionnement à charge élevée dudit moteur à combustion interne (1) ;
ladite soupape de coupure (46) est ouverte et fermée aux instants autres que lorsque ledit moteur à combustion interne est dans l'état de fonctionnement dans lequel le gaz d'EGR est fourni ;
ladite unité de changement ouvre ladite soupape de coupure (46) dans les autres états de fonctionnement ; et
ladite ECU (90) établit les temps d'ouverture et de fermeture de la soupape d'admission (5) et de la soupape d'échappement (9) de sorte qu'une différence entre une pression dans un orifice d'admission (3) et une pression dans un orifice d'échappement (7) soit la plus grande pendant une période de superposition de soupapes de la soupape d'admission (5) et de la soupape d'échappement (9),
**caractérisé en ce que**
ladite ECU (90) comprend :
une unité de détermination de nombre de rotations qui détermine si le nombre de rotations par unité de temps dudit turbocompresseur (50) dépasse une valeur de seuil à l'instant auquel ladite soupape de coupure (46) est fermée ; et
une unité d'interdiction qui interdit la fermeture de ladite soupape de coupure (46), lorsqu'il est déterminé par ladite unité de détermination de nombre de rotations que le nombre de rotations par unité de temps dudit turbocompresseur (50) dépasse la valeur de seuil.

5. Appareil de commande d'un moteur à combustion interne (1) selon l'une quelconque des revendications 1 à 4, **caractérisé en ce qu'**il comprend en outre :
une unité de détermination d'anomalie (90) qui détermine que ladite unité de changement (90) présente une anomalie, lorsque ladite soupape d'EGR (42) est ouverte et lorsque la quantité de gaz d'EGR fournie au dit moteur à combustion interne (1) est inférieure à une valeur estimée.

6. Appareil de commande d'un moteur à combustion interne (1) selon l'une quelconque des revendications 1 à 4, **caractérisé en ce qu'**il comprend en outre :
une unité de détermination d'anomalie (90) qui détermine que ladite unité de changement (90) présente une anomalie, lorsqu'un rendement volumétrique dudit moteur à combustion interne (1) est inférieur à une valeur estimée.
